(19) **Europäisches Patentamt**
**European Patent Office**
**Office européen des brevets**

(11) **EP 2 690 571 A1**

(12) **EUROPEAN PATENT APPLICATION**
published in accordance with Art. 153(4) EPC

(43) Date of publication:
**29.01.2014 Bulletin 2014/05**

(21) Application number: **12761268.7**

(22) Date of filing: **21.03.2012**

(51) Int Cl.:
***G06F 19/00*** (2011.01)

(86) International application number:
**PCT/JP2012/058034**

(87) International publication number:
**WO 2012/128389 (27.09.2012 Gazette 2012/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.03.2011 JP 2011064600**

(71) Applicant: **NEC Corporation
Tokyo 108-8001 (JP)**

(72) Inventor: **MINAMIZAWA, Takeaki
Tokyo 108-8001 (JP)**

(74) Representative: **Vossius & Partner
Siebertstrasse 4
81675 München (DE)**

(54) **PERMIT ISSUANCE APPARATUS AND PERMIT ISSUANCE METHOD**

(57) The present invention provides a permit issuance apparatus and a permit issuance method and program that enable a guarantee of the quality of mining results with respect to users in a case where a mining business uses disturbance attribute values to conduct data mining. The permit issuance apparatus and permit issuance method and program are configured so that in a case where a permit issuance request is received that requests the issuance of an acquisition certificate that indicates the granting of permission to acquire attributes, including at least attribute identification information for one or more attributes and disturbance information for those attributes, disturbance information corresponding to the attributes, which is a condition for granting permission to acquire those attributes, is generated on the basis of the received permit issuance request, and an acquisition certificate is transmitted that associates the attribute identification information and the disturbance information and includes the same.

Fig.1

**Description**

TECHNICAL FIELD

The present invention relates to a permit issuance apparatus and a permit issuance method, and particularly relates to a permit issuance apparatus and a permit issuance method for permitting acquisition of an attribute.

BACKGROUND ART

In recent years, the following becomes possible by using data mining techniques. For example, it is possible to detect information on a moving path of a person and information on a person staying in a vicinity of a shop on the basis of personal position information collected by GPS function of a cellular phone or the like. Moreover, it is possible to study a medicine on the basis of medical record (Karte) information which a medical organization holds. However, the personal position information and the medical record information include sensitive information which the patient does not want others to be aware of. Accordingly, there is a problem that the data mining process has to be carried out with taking care of personal privacy.

As a method to cope with the problem mentioned above, for example, the following method is exemplified. Firstly, an attribute providing operator disturbs an attribute value, which is included in an attribute held by the attribute providing operator, to an extent not falling below a limit within which an utilization objective of a mining operator can be achieved. Secondly, the attribute providing operator provides the mining operator with the attribute which includes the disturbed attribute value.

As an art which realizes the above-mentioned method, a non-patent document 1 discloses the art which is named PPDM (Privacy Preserving Data Mining) to conduct a mining of the attribute (personnel information) in a state that privacy is preserved. Introduction of whole PPDM is described in Chapter 1

(1-9 pages) of the non-patent document 1. Moreover, the disturbance of the attribute value is described in Chapter 7 (157-181 pages) of the non-patent document 1.

Moreover, for example, an attribute processing system described in a patent document 1 discloses one art related to PPDM. The attribute processing system described in the patent document 1 includes an attribute releasing apparatus which releases the attribute, and an attribute checking unit which checks the attribute. First, a transmission unit releases a concealed liking list, which is generated by applying a one-directional function to a user's liking list of the attribute releasing apparatus, by transmitting the concealed liking list to a WWW (World Wide Web) server. Next, a check unit checks a concealed liking list, which is generated by applying the same one-directional function to a user's liking list of the attribute checking apparatus, with the concealed liking list which is released by the WWW server. Next, in the case that two concealed liking lists are identical each other, a display unit display the liking list.

[Patent document]

   [Patent document 1] Japanese Patent Application Laid-Open No. 2010-176308

[Non-patent document]

   [Non-patent literature 1] 'Privacy-Preserving Data Mining: Models and Algorithms' Edited by Charu C. Aggarwal and Philip S. Yu, July 2008, p.1-9 and 157-181

SUMMARY OF THE INVENTION

[PROBLEM TO BE SOLVED BY THE INVENTION]

However, the arts described in the patent document and the non-patent document mentioned above have the following problem. The problem is that, in the case that the mining operator conducts the data mining by use of the disturbed attribute value, the mining operator may not be able to guarantee a user a quality of the mining results in some cases.

The reason why the quality cannot be guaranteed is as follows. According to the art disclosed in the non-patent document 1, the mining operator cannot know the extent of the attribute providing operator's disturbing the attribute value.

Moreover, according to the art disclosed by the attribute processing system, which is described in the patent document 1, the disturbance is conducted by use of the one-directional function. Accordingly, a party which the attribute value is provided (corresponding to the mining operator) knows the extent of the disturbance. However, according to the art disclosed by the attribute processing system, the disturbance is conducted with a fixed method. Accordingly, a system, which conducts to disturb the attribute value while using various methods according to various utilization objectives, can not use the art described in the patent document 1.

An object of the present invention is to provide a permit issuance apparatus and a permit issuance method which solve the above-mentioned problem.

[MEANS FOR SOLVING A PROBLEM]

A permit issuance apparatus according to a first aspect of the present invention includes:

in the case of receiving a permit issuance request for requesting issuance of an acquisition permit that includes at least attribute identification information of one or more than one attributes, and disturbance information corresponding to said attribute, and that indicates to permit acquisition of said attributes,
a disturbance information generating means for generating the disturbance information, which is a condition for permitting acquisition of said attribute and which is corresponding to said attribute, on the basis of said received permit issuance request; and
a permit issuance means for transmitting the acquisition permit which associates said attribute identification information and said disturbance information and includes the association.

A permit issuance method which a computer executes, according to a second aspect of the present invention, includes:

in the case of receiving a permit issuance request for requesting issuance  of an acquisition permit which includes at least attribute identification information of one or more than one attributes, and disturbance information corresponding to said attribute and which indicates to permit acquisition of said attributes,
generating said disturbance information, which is a condition for permitting acquisition of said attribute and which is corresponding to said attribute, on the basis of said received permit issuance request; and
transmitting the acquisition permit which associates said attribute identification information and said disturbance information and includes the association.

A non- transitory medium according to a third aspect of the present invention for recording a program which causes a computer to execute a processing, the processing includes:

in the case of receiving a permit issuance request for requesting issuance of an acquisition permit which includes at least attribute identification information of one or more than one attributes, and disturbance information corresponding to said attribute and which indicates to permit acquisition of said attributes,
generating the disturbance information, which is a condition for permitting acquisition of said attribute and which is corresponding to said attribute, on the basis of said received permit issuance request; and
transmitting the acquisition permit which associates said attribute identification information and said disturbance information and includes the association.

[EFFECT OF THE INVENTION]

In the case that the mining operator conducts the data mining by use of the disturbed attribute value, the present invention includes an effect that the mining operator can guarantee the user the quality of the mining results.

BRIEF DESCRIPTION OF THE DRAWINGS

Fig. 1 is a block diagram showing a configuration according to a first exemplary embodiment of the present invention.
Fig. 2 is a sequence diagram showing an example of a protocol in the first exemplary embodiment of the present invention.
Fig. 3 shows an example of association information in the first exemplary embodiment of the present invention.
Fig. 4 shows another example of the association information in the first exemplary embodiment of the present invention.

Fig. 5 is a flowchart showing an operation of a permit issuance apparatus in the first exemplary embodiment of the present invention.

Fig. 6 shows an example of association information in a second exemplary embodiment of the present invention.

Fig. 7 is a block diagram showing a configuration according to a third exemplary embodiment of the present invention.

Fig. 8 shows an example of a state of distribution of attribute values in the third exemplary embodiment of the present invention.

Fig. 9 shows an example of attribute value distribution information in the third exemplary embodiment of the present invention.

Fig. 10 shows an example of additional-noise information in the third exemplary embodiment of the present invention.

Fig. 11 is a block diagram showing a configuration according to a fourth exemplary embodiment of the present invention.

Fig. 12 shows an example of association information in the fourth exemplary embodiment of the present invention.

Fig. 13 shows another example of the association information in the fourth exemplary embodiment of the present invention.

Fig. 14 is a block diagram showing a configuration of the permit issuance apparatus according to the first exemplary embodiment of the present invention.

Fig. 15 is a block diagram showing a configuration of a duplication avoiding controller which makes a computer execute a predetermined process by use of a program in a fifth exemplary embodiment of the present invention.

Fig. 16 shows a recording medium in the fifth exemplary embodiment of the present invention.

EXEMPLARY EMBODIMENTS FOR CARRYING OUT THE INVENTION

Next, an exemplary embodiment according to the present invention will be described in detail with reference to a drawing.

< < <First exemplary embodiment>>>

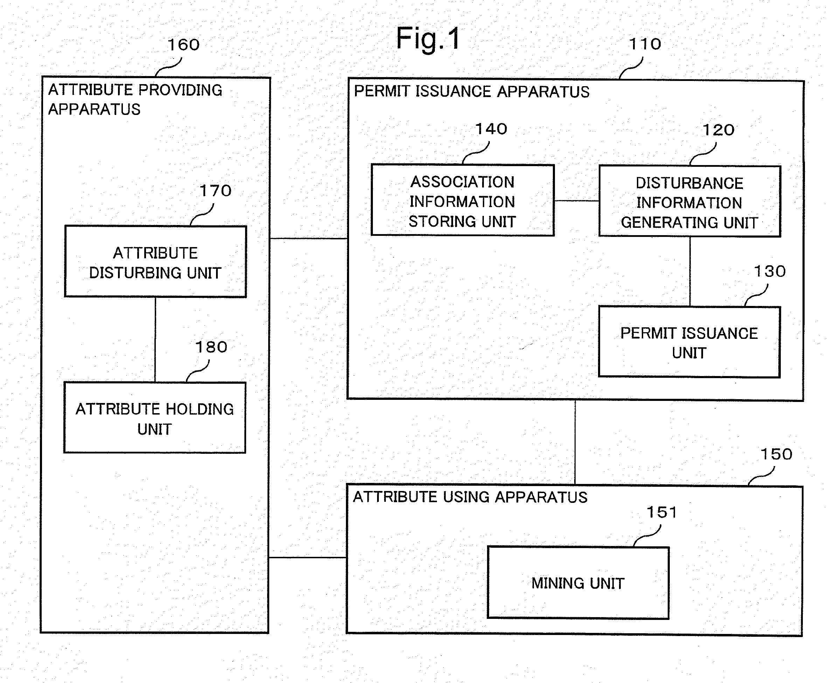

Fig. 1 is a block diagram showing an example of a configuration of an information processing system according to a first exemplary embodiment of the present invention.

Referring to Fig. 1, the information processing system according to the exemplary embodiment includes a permit issuance apparatus 110, an attribute using apparatus 150 and an attribute providing apparatus 160. The permit issuance apparatus 110, the attribute using apparatus 150 and the attribute providing apparatus 160 are connected each other through interfaces which are not shown in the figure.

The attribute using apparatus 150 is a server, a terminal or the like of an operator (for example, mining operator) who uses an attribute. The attribute providing apparatus 160 is a server, a terminal or the like of an operator who holds and provides an attribute. The permit issuance apparatus 110 issues an acquisition permit, which permits to acquire an attribute held by the attribute providing apparatus 160, on the basis of a permit issuance request from the attribute using apparatus 150, and transmits the acquisition permit to the attribute using apparatus 150.

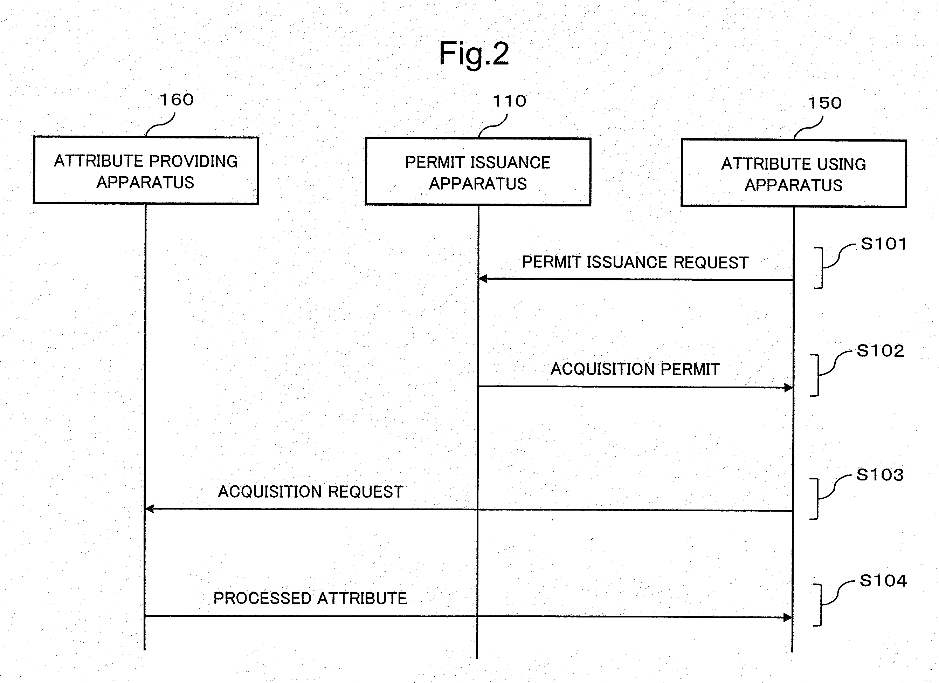

Next, in order to understand the exemplary embodiment, an outline of an operation of the information processing system will be described before describing a detailed configuration of the information processing system shown in Fig. 1. Fig. 2 is a sequence diagram showing an example of a protocol which is applied among the permit issuance apparatus 110, the attribute using apparatus 150 and the attribute providing apparatus 160.

The attribute using apparatus 150 transmits the permit issuance request for an acquisition permit of a specific attribute. Then, the permit issuance apparatus 110 receives the permit issuance request (S101).

Here, the acquisition permit is information which includes at least attribute identification information of one or more than one attributes, and disturbance information corresponding to the one or more than one attributes, and which indicates to permit acquisition of the one or more than one attributes. The disturbance information is information which indicates an extent of disturbance added to the attribute which the attribute providing apparatus 160 provides the attribute using apparatus 150. That is, the disturbance information is information which indicates a condition (condition for providing) for permitting acquisition of the attribute. Moreover, the acquisition permit may include electronic signing data of the permit issuance apparatus 110. In this case, the permit issuance apparatus 110 encrypts a combination of the following four information by use of an own encryption key and generates the electronic signing data. The first information is the attribute identification information of the one or more than one attributes included in the acquisition permit. The second information is the disturbance information corresponding to the one or more than one attributes. The third information is identification information (for example, an address of a sender who issues the permit issuance request) of the attribute using apparatus 150. The fourth information is own identification information (identification information which has been already registered with the certificate authority which is not shown in the figure.).

Moreover, the permit issuance request requests issuance of the acquisition permit. The permit issuance request includes the attribute identification information of the attribute whose acquisition permission is indicated by the acquisition permit, and information on an objective of utilizing the attribute (for example, mining which is conducted in a specific calculation content).

Next, the permit issuance apparatus 110 generates the acquisition permit on the basis of the received permit issuance request and transmits the acquisition permit. Then, the attribute using apparatus 150 receives the acquisition permit

(S102). At this time, the attribute using apparatus 150 can know the extent of the disturbance of the attribute value, which can be acquired, on the basis of the disturbance information included in the acquisition permit. Next, the attribute using apparatus 150 judges on the basis of the extent of the disturbance whether the disturbed attribute value, which can be acquired, is the useless disturbed attribute value which can not guarantee a user quality of mining results, or not. Next, in the case that the attribute using apparatus 150 judges that the disturbed attribute value is the useless disturbed attribute value, the attribute using apparatus 150 may stop carrying out the acquisition of the attribute information (Step S103 is not carried out). Moreover, the attribute using apparatus 150 may change 'utilization objective' which will be described later, and redo the process from Step S101.

Next, the attribute using apparatus 150 transmits an acquisition request which requests to acquire the specific attribute and which includes the received acquisition permit. Then, the attribute providing apparatus 160 receives the acquisition request (S103). The acquisition request includes at least the acquisition permit corresponding to the attribute which is an acquisition object.

Next, the attribute providing apparatus 160 generates a processed attribute on the basis the received acquisition request. Then, as a reply to the acquisition request, the attribute using apparatus 150 receives the processed attribute (S104). The processed attribute includes at least an attribute name and an attribute value. Furthermore, the processed attribute may include subject identification information of a subject which includes the attribute. Here, the attribute value of the processed attribute is an attribute value which is disturbed by the attribute providing apparatus 160 on the basis of the disturbance information included in the acquisition permit. For example, in the case that an operator of the attribute providing apparatus is the cellular phone service provider, the subject identification information is identification information for identifying a contractor of the cellular phone. Moreover, for example, in the case that the operator of the attribute providing apparatus is a medical organization, the subject identification information is identification information for identifying a patient who is hospitalized or goes to the medical organization regularly.

In the case that the acquisition permit includes an electronic signing of the permit issuance treatment 110, the attribute providing apparatus 160 may transmit the processed information after confirming that the acquisition permit is not garbled by using the electronic signing.

Next, specific examples of the permit issuance request and the acquisition permit mentioned above will be described.

According to the exemplary embodiment, as a description form of the permit issuance request and the acquisition permit, for example, XML (Extensible Markup Language) description like SAML (Security Assertion Markup Language), which OASIS (Organization for the Advancement of Structured Information Standards) standardizes, is used.

The permit issuance apparatus 110 is corresponding to the SAML authority in the SAML protocol, and the attribute using apparatus 150 is corresponding to the requestor in the SAML protocol.

The attribute using apparatus 150 transmits after including the permit issuance request in the element of the query <SubjectQuery> of the SAML request.

The permit issuance apparatus 110 transmits after including the acquisition permit in the element of the assertion <Advice> of the SAML reply.

Next, the attribute using apparatus 150 will be described in detail.

The attribute using apparatus 150 includes a mining unit 151.

With respect to an attribute which is necessary at a time when conducting a specific mining, the mining unit 151 generates a permit issuance request which includes the attribute identification information of the attribute and the utilization objective of the attribute, and outputs the permit issuance request. The mining unit 151 generates the permit issue request with reference to information which is held in a storage unit not shown in the figure and which associates the attribute identification information of the attribute, and the utilization objective of the attribute with the specific mining. It is also possible to acquire information, which associates an instruction to conduct the specific mining, the attribute identification information of the attribute which is corresponding to the instruction, and the utilization objective of the attribute, from an input means not shown in the figure.

Next, the permit issuance apparatus 110 will be described in detail.

The permit issuance apparatus 110 includes a disturbance information generating unit 120, a permit issuance unit 130 and an association information storing unit 140.

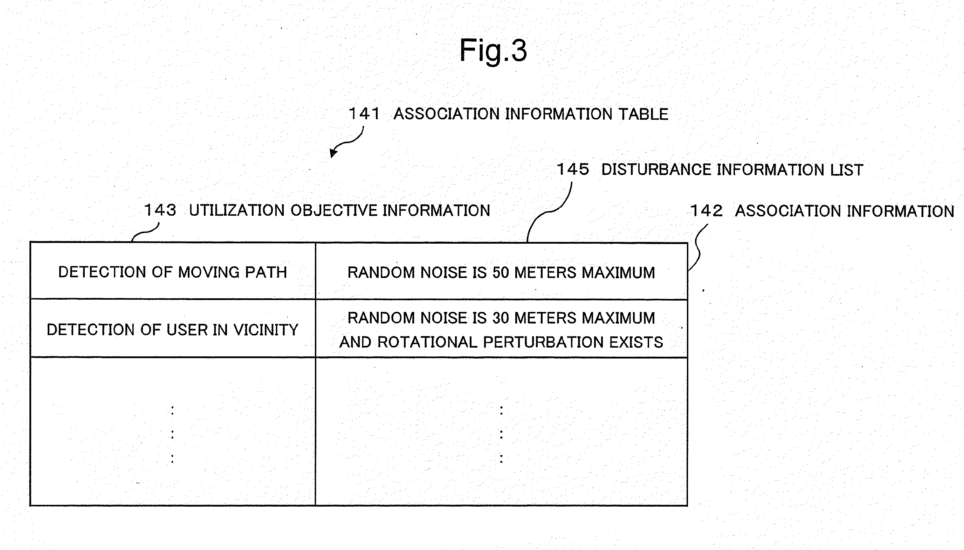

The association information storing unit 140 stores association information which associates utilization objective information and a disturbance information list of the attribute. Fig. 3 shows an example of association information 142.

The disturbance information list includes at least one disturbance information which is corresponding to each utilization objective information. Referring to Fig. 3, the association information 142 includes utilization objective information 143 and a disturbance information list 145. Moreover, an association information table 141 includes one or more than one sets of association information 142. Here, the association information is not limited to information related to geographical information such as position measurement data which is indicated by the association information 142 in Fig. 3. For example, the association information may be medical data, management data and consumption data.

The disturbance information generating unit 120 receives the permit issuance request, which includes the utilization objective information and the attribute identification information, from the attribute using apparatus 150. Moreover, the disturbance information generating unit 120 generates the disturbance information corresponding to the attribute, which is specified by the attribute identification information included in the permit issuance request, on the basis of the utilization objective information included in the permit issuance request.

For example, in the case that the utilization objective information included in the permit issuance request is 'detection of movement path', the disturbance information generating unit 120 detects the association information 142, which includes the utilization objective information 143 corresponding to 'detection of movement path', with reference to the association information table 141 shown in Fig. 3. Next, the disturbance information generating unit 120 generates the following disturbance information on the basis of 'random noise is 50 meters maximum' which is corresponding to contents of the disturbance information list 145 included in the detected association information 142, and outputs the disturbance information. The disturbance information is noise information which indicates 'random noise is maximum 50 meters'.

For example, in the case that the utilization objective information included in the permit issuance request is 'detection of user in vicinity', the disturbance information generating unit 120 detects the association information 142, which includes the utilization objective information 143 corresponding to 'detection of user in vicinity', with reference to the association information table 141 shown in Fig. 3. Next, the disturbance information generating unit 120 generates the following disturbance information on the basis of 'random noise is 50 meters maximum and rotational perturbation exists' which is corresponding to contents of the disturbance information list 145 included in the detected association information 142, and outputs the disturbance information. The disturbance information is the noise information which indicates 'random noise is 50 meters maximum', and rotational perturbation information which indicates 'rotational perturbation exists'.

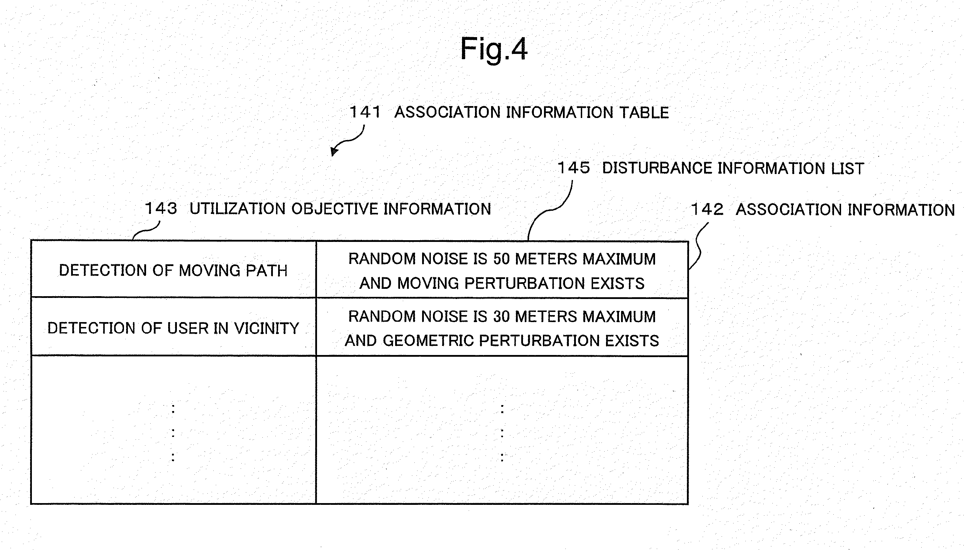

Fig. 4 shows another example of the association information 142. For example, in the case that the utilization objective information included in the permit issuance request is 'detection of movement path', the disturbance information generating unit 120 detects the association information 142, which includes the utilization objective information 143 corresponding to 'detection of movement path', with reference to the association information table 141 shown in Fig. 4. Next, the disturbance information generating unit 120 generates the following disturbance information on the basis of 'random noise is 50 meters maximum and moving perturbation exists' which is corresponding to contents of the disturbance information list 145 included in the detected association information 142, and outputs the disturbance information. The disturbance information is the noise information which indicates 'random noise is 50 meters maximum', and moving perturbation information which indicates 'moving perturbation exists'.

For example, in the case that the utilization objective information included in the permit issuance request is 'detection of user in vicinity', the disturbance information generating unit 120 detects the association information 142, which includes the utilization objective information 143 corresponding to 'detection of user in vicinity', with reference to the association information table 141 shown in Fig. 4. Next, the disturbance information generating unit 120 generates the following disturbance information on the basis of 'random noise is 50 meters maximum and geometric perturbation exists' which is corresponding to contents of the disturbance information list 145 included in the detected association information 142, and outputs the disturbance information. The disturbance information is the noise information which indicates 'random noise is 50 meters maximum', and geometric perturbation information which indicates 'geometric perturbation exists'. Here the geometric perturbation means perturbation which is obtained by adding the moving perturbation to the rotative perturbation.

The permit issuance unit 130 transmits the acquisition permit, which includes the disturbance information generated by the disturbance information generating unit 120, and the corresponding attribute identification information, to the attribute using apparatus 150.

Next, an operation of the permit issuance apparatus 110 will be described in detail.

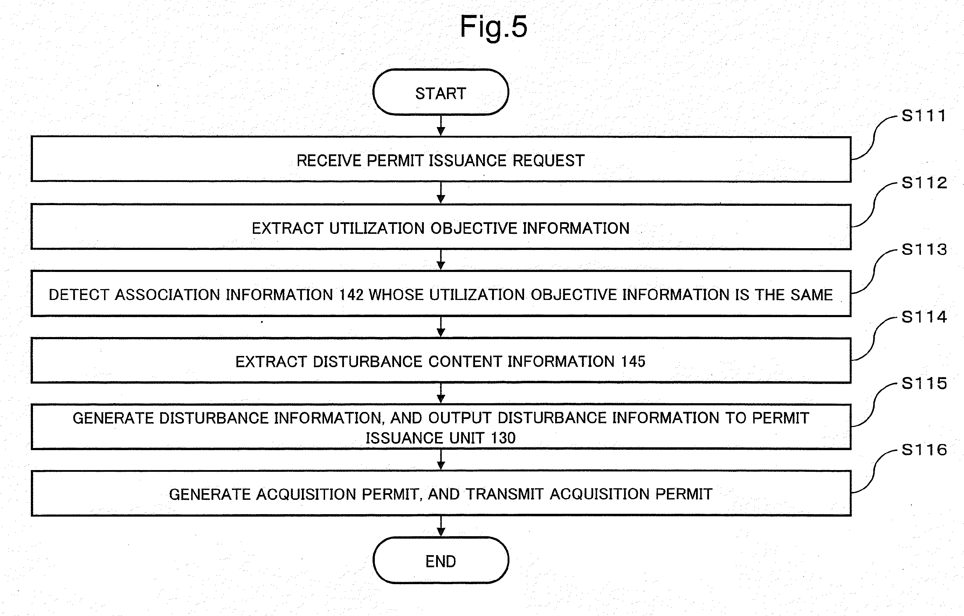

Fig. 5 is a flowchart showing the operation of the permit issuance apparatus 110 in the exemplary embodiment.

First, the disturbance information generating unit 120 receives the permit issuance request from the attribute using apparatus 150 (S111).

Next, the disturbance information generating unit 120 extracts the utilization objective information which is included in the permit issuance request (S112).

Next, the disturbance information generating unit 120, with reference to the association information table 141, detects the association information 142 which includes the same utilization objective information 143 as the extracted utilization objective information (S113).

Next, the disturbance information generating unit 120 extracts the disturbance information list 145 of the detected association information 142 (S114).

Next, the disturbance information generating unit 120 generates the disturbance information on the basis of the extracted disturbance information list 145 and outputs the disturbance information to the permit issuance unit 130 (S115).

Next, the permit issuance unit 130 generates the acquisition permit, which includes the disturbance information received from the disturbance information generating unit 120 and the corresponding attribute identification information (one extracted from the permit issuance request), and transmits the acquisition permit to the attribute using apparatus 150 (S 116).

Next, the attribute providing apparatus 160 will be described in detail.

The attribute providing apparatus 160 includes an attribute disturbing unit 170 and an attribute holding unit 180.

The attribute disturbing unit 170 receives the acquisition request. Next, the attribute disturbing unit 170 refers to the attribute holding unit 180, and generates a processed attribute by disturbing the attribute, which is specified by the attribute identification information included in the acquisition permit of the acquisition request, on the basis of the disturbance information included in the acquisition permit.

For example, in the case that the disturbance information is the noise information which indicates 'random noise is 50 meters maximum', the attribute disturbing unit 170 processes the attribute value, which is acquired from the attribute holding unit 180, into a processed attribute value by shifting the attribute value by 50 meters maximum (by adding noise), and generates the processed attribute including the processed attribute value. Here, the attribute value acquired from the attribute holding unit 180 is, for example, information on the absolute position expressed in a form of the latitude and longitude. The processed attribute value which is shifted by 50 meters maximum is information on the absolute position which is changed after the addition of the noise.

For example, in the case that the disturbance information is the rotational perturbation information which indicates 'rotational perturbation exists', the attribute disturbing unit 170 processes the attribute value, which is acquired from the attribute holding unit 180, into the processed attribute value by perturbing the attribute rotationally, and generates the processed attribute including the process attribute value. Here, the attribute value which is acquired from the attribute holding unit 180 is, for example, information on a position based on a coordinate system whose origin is a position of a store and whose axes are the latitudinal line and the longitudinal line. Moreover, the processed attribute value which is perturbed rotationally is information on a position which is changed after the rotational perturbation. The rotational perturbation means to make an angle of a straight line, which is drawn from the store (origin) to a subject including the attribute value, with the latitude line changed (perturbed) on the basis of a predetermined rule (for example, change at random).

For example, in the case that the disturbance information is the moving perturbation information which indicates 'moving perturbation exists', the attribute disturbing unit 170 processes the attribute value, which is acquired from the attribute holding unit 180, into the processed attribute value by carrying out the moving perturbation, and generates the processed attribute including the process attribute value. Here, the attribute value which is acquired from the attribute holding unit 180 is, for example, information on a position based on a coordinate system whose origin is a position of a store and whose axes are the latitudinal line and the longitudinal line. Moreover, the processed attribute value which is moving-perturbed is information on a position which is changed after the moving perturbation. The moving perturbation means to make a distance from the store (origin) to the subject including the attribute value changed (perturbed) on the basis of a predetermined rule (for example, addition of a predetermined value).

For example, in the case that the disturbance information is the geometric perturbation information which indicates 'geometric perturbation exists', the attribute disturbing unit 170 processes the attribute value, which is acquired from the attribute holding unit 180, into the processed attribute value by carrying out the geometric perturbation, and generates the processed attribute which includes the processed attribute value. Here, the attribute value which is acquired from the attribute holding unit 180 is, for example, information on a position based on a coordinate system whose origin is a position of a store and whose axes are the latitudinal line and the longitudinal line. Moreover, the processed attribute value which is perturbed geometrically is information on a position which is changed after the geometric perturbation. The geometric perturbation means perturbation which is synthesized on the basis of both the change in the angle which is described in the rotational perturbation, and the change in the distance described in the moving perturbation.

Next, the attribute disturbing unit 170 transmits the generated processed attribute to the attribute using apparatus 150.

The attribute holding unit 180 associates at least an attribute name and the attribute value, and holds the association. Moreover, the attribute holding unit 180 may add the subject identification information of the subject, which includes the attribute, to the association, and hold the added association.

A first effect according to the exemplary embodiment mentioned above is that, in the case that the mining operator conducts the data mining by use of the disturbed attribute value, the mining operator can guarantee the user the quality of the mining results.

The reason is that the disturbance information generating unit 120 generates the disturbance information on the basis of the permit issuance request, and the permit issuance unit 130 transmits the acquisition permit including the disturbance information. That is, the reason is that by carrying out the above-mentioned operation, the attribute using apparatus 150 receives the acquisition permit including the disturbance information, and consequently can know the extent of disturbing the attribute value.

A second effect according to the above-mentioned exemplary embodiment is that the attribute using apparatus 150 can prevent acquiring the useless disturbed attribute value which can not guarantee the user the desired quality of the mining results.

The reason is similar to the reason of the first effect. That is, the reason is that by carrying out the above-mentioned operation, the attribute using apparatus 150 can know the extent of the disturbance at a time when receiving the acquisition permit, and consequently can cancel acquiring the attribute information and change the utilization objective.

< < <Second exemplary embodiment>>>

Next, a second exemplary embodiment according to the present invention will be described in detail with reference to a drawing. Hereinafter, description on contents which overlap with the above-mentioned description is omitted within a range where description on the exemplary embodiment does not become unclear.

The second exemplary embodiment of the present invention is different from the first exemplary embodiment in contents of the permit issuance request, association information, contents of the acquisition permit, an operation of the disturbance information generating unit 120, and an operation of the permit issuance unit 130.

The permit issuance request according to the exemplary embodiment includes identification information of a specific attribute which is requested to be acquired, an utilization objective of the specific attribute, and planned number of times of acquiring the attribute.

With respect to an attribute which is necessary at a time when conducting a specific mining, the mining unit 151 of the attribute using apparatus 150 according to the exemplary embodiment generates a permit issuance request, which includes the attribute identification information of the attribute, the planned number of times of acquiring the attribute, and the utilization objective of the attribute, and outputs the permit issuance request. With reference to information which associates the attribute identification information of the attribute, the planned number of times of acquiring the attribute, and the utilization objective of the attribute with the specific mining and which is held in a storage unit not shown in the figure, the mining unit 151 generates the permit issuance request. Information, which associates an instruction to conduct the specific mining, the attribute identification information of the attribute corresponding to the instruction, the planned number of times of acquiring the attribute, and the utilization objective of the attribute, may be acquired from an input means which is not shown in the figure.

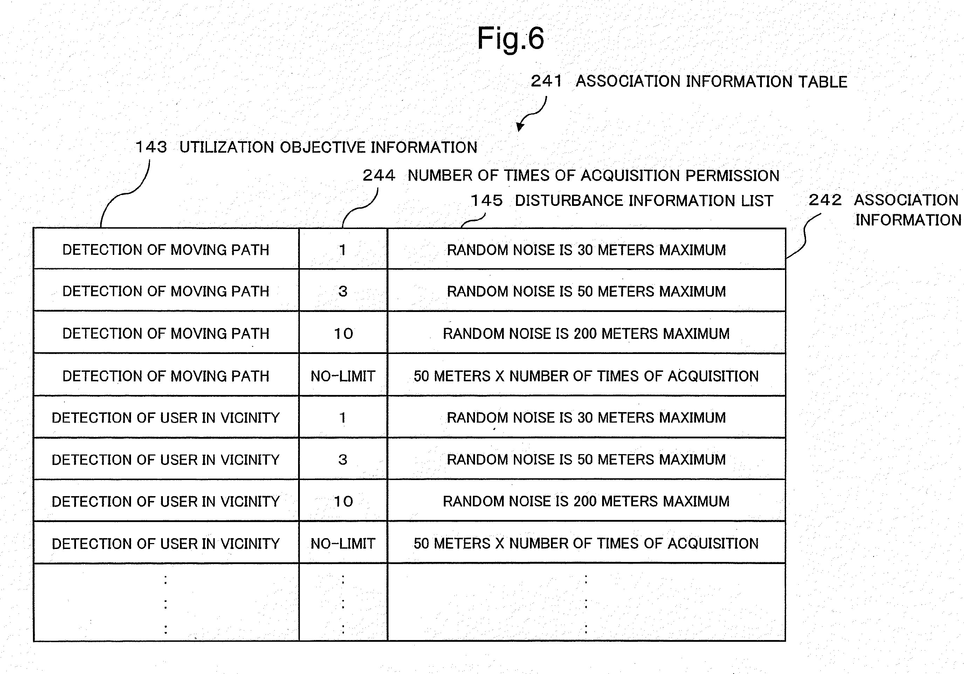

Fig. 6 shows an example of association information 242 according to the exemplary embodiment. Referring to Fig. 6, the association information 242 includes the utilization objective information 143, number of times of acquisition permission 244 and the disturbance information list 145. Moreover, an association information table 241 includes one or more than one association information 242.

The acquisition permit according to the exemplary embodiment is information which includes at least the attribute identification information of one or more than one attributes, the disturbance information corresponding to the one or more than one attributes, and the number of times of acquisition permission 244, and which indicates to permit acquiring the one or more than one attributes.

The disturbance information generating unit 120 according to the exemplary embodiment receives the permit issuance request. In the case, the disturbance information generating unit 120 generates the disturbance information, which is corresponding to the attribute specified by the attribute identification information included in the permit issuance, on the basis of the utilization objective information and the planned number of times of acquiring the attribute which are included in the permit issuance request.

For example, in the case that the utilization objective information included in the permit issuance request is 'detection of moving path' and the planned number of times of acquiring the attribute' is '8 times', the disturbance information generating unit 120 detects the association information 242 with reference to the association information table 241 shown in Fig. 6. The detected association information 242 includes the utilization objective information 143 (information which indicates 'detection of moving path') and the number of times of acquisition permission 244 ('10 times'). That is, the disturbance information generating unit 120 detects the association information 242 whose utilization objective information is identical with one included in the permit issuance request, and whose number of times of acquisition permission 244 is not smaller than and the closest to the planned number of times of acquisition permission. Next, the disturbance information generating unit 120 generates the noise information, which indicates 'random noise is 200 meters maximum' as the disturbance information, on the basis of the disturbance information list 145 (information which indicates 'random noise is 200 meters maximum') which is included in the detected association information 242, and outputs the noise information. Simultaneously, the disturbance information generating unit 120 outputs the number of times of acquisition permission 244 which is included in the detected association information 242.

The permit issuance unit 130 according to the exemplary embodiment transmits the acquisition permit including the disturbance information and the number of times of acquisition permission 244 which the disturbance information generating unit 120 outputs, and the corresponding attribute identification information, to the attribute using apparatus 150.

Here, in the case that the added random noise has a specific distribution, the attribute using apparatus 150 can estimate a true value (value before adding the noise) easily from an average of the attribute values, each of which is included in the acquired attribute, as the number of times of acquiring the attribute increases. Here, the specific distribution is, for example, the uniform distribution and the Gauss distribution. As a measure against the estimation, for example, a method of generating the disturbance may be a method of adding the noise, which is deflective from the distribution, as the number of times of acquiring the attribute increases. For example, the noise, which is deflective from the distribution, may be generated by making a degree of freedom $\varphi$ (referred to as degree of deflection) of noise, which is based on the chi-square distribution, small (minimum of $\varphi$ is 3) as the number of times of acquiring data becomes increasing. Here, the degree of deflection becomes large as a value of the degree of freedom $\varphi$ becomes small. In this case, the disturbance information may include the value of the degree of freedom $\varphi$, which is corresponding to the number of times of the acquisition (number of times of using the acquisition permit), as noise deflection information which indicates association between the number of times of using the acquisition permit and the degree of deflection of the distribution of the added noise.

In the case that the attribute providing apparatus 160 according to the exemplary embodiment receives the acquisition request including the acquisition permit with exceeding the number of times of the acquisition permission included in the acquisition permit, the attribute providing apparatus 160 refuses to provide the attribute (does not transmit the processed attribute).

Moreover, in the case that the attribute disturbing unit 170 of the attribute providing apparatus 160 according to the exemplary embodiment receives the acquisition permit including the noise deflection information, the attribute disturbing unit 170 generates the processed attribute value by processing the attribute value acquired from the attribute holding unit 180, and generates the processed attribute including the processed attribute value.

First, the attribute disturbing unit 170 determines the degree of deflection of the distribution of the noise on the basis of the noise deflection information which is included in the acquisition permit. Next, the attribute disturbing unit 170 determines an amount of the noise, which should be added, on the basis of the noise information included in the acquisition permit, and the determined degree of deflection. Next, the attribute disturbing unit 170 generates the processed attribute value by adding a determined amount of noise to the attribute value acquired from the attribute holding unit 180, and generates the processed attribute including the processed attribute value.

In addition to the effect which the first exemplary embodiment includes, the exemplary embodiment mentioned above includes a first effect in a point that the attribute using apparatus 150 can guarantee the quality of the mining results more minutely.

The reason is that the disturbance information generating unit 120 generates the disturbance information on the basis of the permit issuance request which includes furthermore the planned number of times of acquiring the attribute.

The exemplary embodiment mentioned above includes a second effect in a point that the attribute using apparatus 150 can cope with the disturbance which prevents estimation of the value which the attribute holds before adding the noise.

The reason is that the disturbance information generating unit 120 makes the degree of freedom $\varphi$ (degree of deflection), which is corresponding to the number of times of acquiring the attribute, included in the disturbance information.

< < <Third exemplary embodiment>>>

Next, a third exemplary embodiment according to the present invention will be described in detail with reference to a drawing. Hereinafter, description on contents which overlap with the above-mentioned description is omitted within a range where description on the exemplary embodiment does not become unclear.

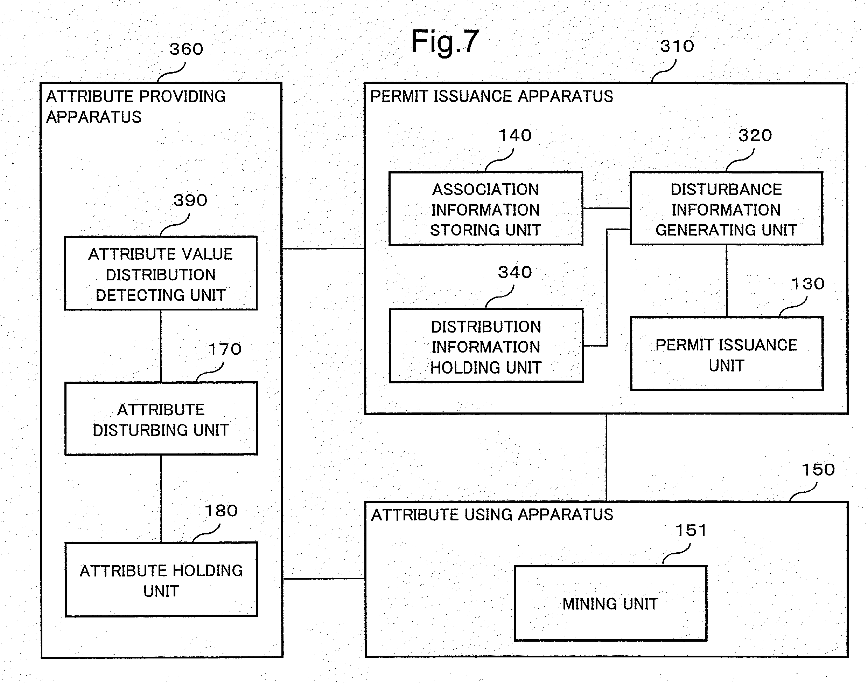

Fig. 7 is a block diagram showing a configuration according to the third exemplary embodiment of the present invention.

In comparison with the permit issuance apparatus 110 according to the first exemplary embodiment with referring to Fig. 7, a permit issuance apparatus 310 according to the exemplary embodiment includes a disturbance information generating unit 320 in place of the disturbance information generating unit 120, and includes furthermore a distribution information holding unit 340. An attribute providing apparatus 360 according to the exemplary embodiment includes furthermore an attribute value distribution detecting unit 390 in comparison with the attribute providing apparatus 160 according to the first exemplary embodiment.

The attribute value distribution detecting unit 390 of the attribute providing apparatus 360 generates attribute value distribution information with reference to the attribute holding unit 180. Next, the attribute value distribution detecting unit 390 transmits the generated attribute value distribution information to the permit issuance apparatus 310.

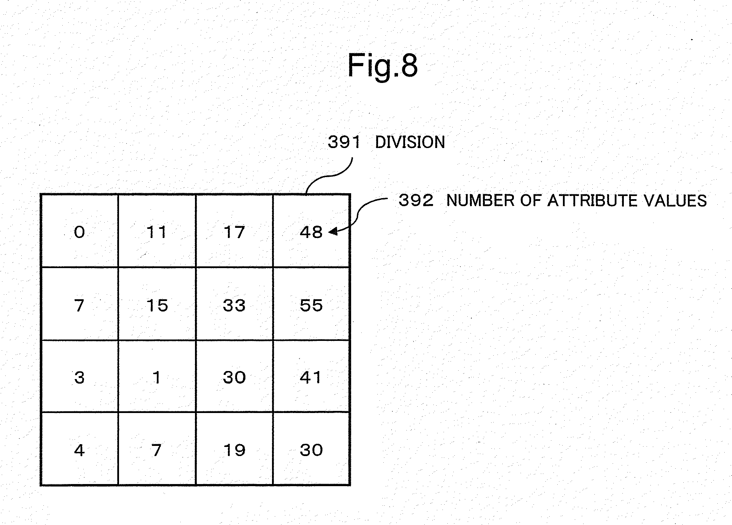

Fig. 8 shows an example of a state of distribution of the attribute value. Fig. 8 shows that an area is divided into fixed divisions (for example, 1 kilometer square) 391, and number of the attribute values 392, which exist in each division, is written in per the division, where the attribute value means, for example, a value of a present position, and the number 392 means number of subjects holding the corresponding attribute.

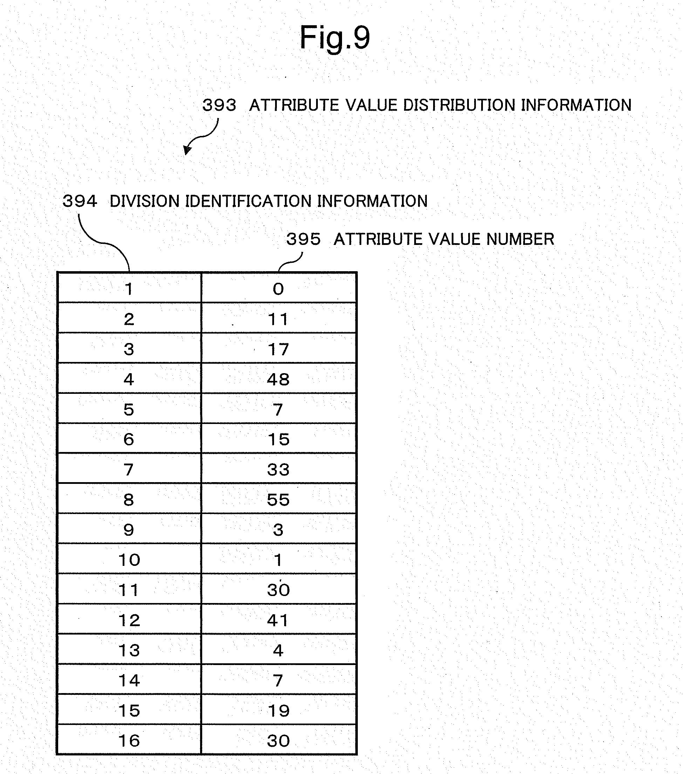

Fig. 9 shows an example of attribute value distribution information 393 corresponding to the distribution of the attribute value shown in Fig. 8. The attribute value distribution information 393 includes one or more than one sets of division identification information 394 which identifies the division 391, and an attribute value number 395 which is corresponding to the number of the attribute value 392 distributed in the division 391. The division identification information 394 may be latitude information and longitude information which designate a range of the division 391 or may be a relatively-unique serial number which designates the range of the division 391.

The distribution information holding unit 340 of the permit issuance apparatus 310 receives and holds the attribute value distribution information 393.

The disturbance information generating unit 320 generates additional-noise information as the disturbance information on the basis of the attribute distribution information 393 which the distribution information holding unit 340 holds.

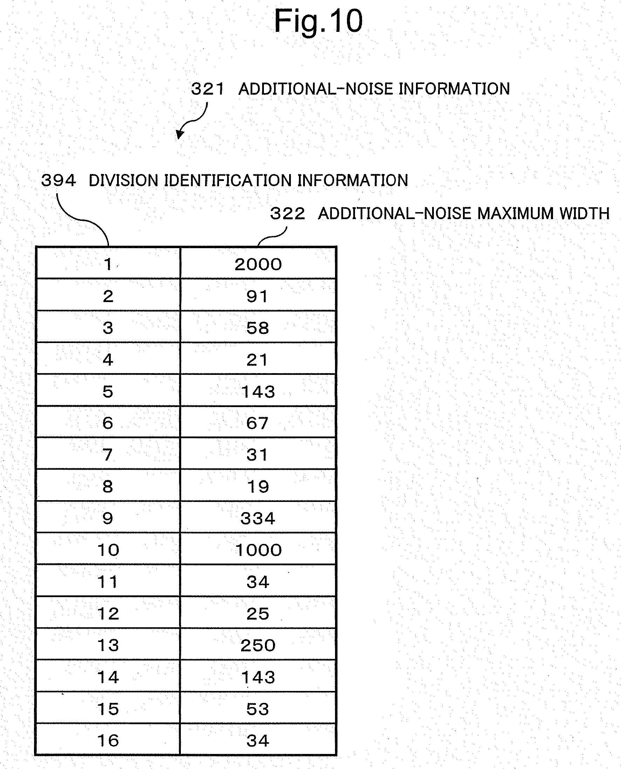

Fig. 10 shows an example of additional-noise information 321. The example of the additional-noise information 321 shown in Fig. 10 is generated on the basis of the attribute value distribution information 393 shown in Fig. 9. As shown in Fig. 10, the additional-noise information 321 includes one or more than one sets of the division identification information 394 and an additional-noise maximum width 322. The additional-noise maximum width 322 indicates a maximum value of random noise (meter is unit of width) which is added to the attribute value existing in each division 391 specified by the division identification information 394.

The disturbance information generating unit 320 makes the maximum value of the random noise, which is added in a division 391, a value which is 1000 times as large as a reciprocal of the attribute value number 395 existing in the division 391. For example, in the case of the division 391 which exists in a top row and second column from the left in Fig. 8, the maximum value is given in the following.

$$1000/11 = 91 \ (\text{round off at the first decimal place}).$$

However, in the case that the attribute value number, which exists in the division, is 0 (for example, division in a top row and the most left column), the disturbance information generating unit 320 sets the maximum value of the random noise, which is added in the division, to 2000 meters.

Here, the permit issuance apparatus 310 may receive the attribute value distribution information from an input means (for example, input by an operator's handling a keyboard) which is not shown in the figure. In this case, the attribute providing apparatus 360 may not include the attribute value distribution detecting unit 390.

In addition to the effect which the first exemplary embodiment includes, the exemplary embodiment mentioned above includes an effect in a point that the attribute using apparatus 150 can guarantee the quality of the mining results more minutely.

The reason is that the disturbance information generating unit 120 generates the additional-noise information as the disturbance information on the basis of the attribute value distribution information 393.

< < <Fourth exemplary embodiment>>>

Next, a fourth exemplary embodiment according to the present invention will be described in detail with reference to a drawing. Hereinafter, description on contents which overlap with the above-mentioned description is omitted within a range where description on the exemplary embodiment does not become unclear.

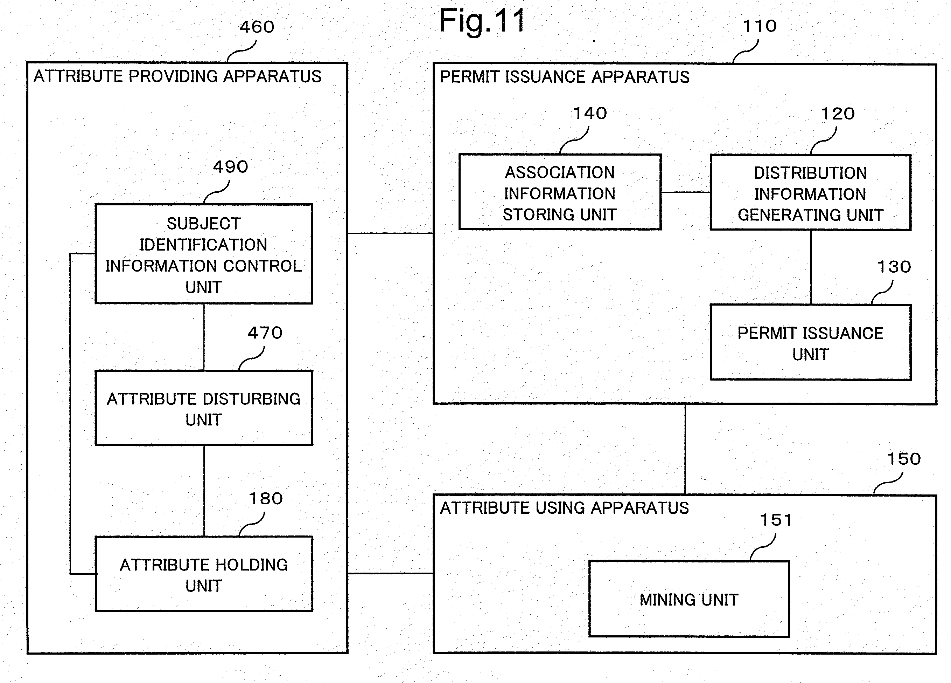

Fig. 11 is a block diagram showing a configuration according to the fourth exemplary embodiment of the present invention.

In comparison with the attribute providing apparatus 160 according to the first exemplary embodiment with referring to Fig. 11, an attribute providing apparatus 460 according to the exemplary embodiment includes an attribute disturbing unit 470 in place of the attribute disturbing unit 170, and includes furthermore a subject identification information control unit 490.

The subject identification information control unit 490 of the attribute providing apparatus 460 changes subject identification information, which the attribute holding unit 180 holds, on the basis of an instruction of the attribute disturbing unit 470. The attribute disturbing unit 470 instructs the subject identification information control unit 490 to change the subject identification information on the basis of the disturbance information which is included in the acquisition permit. For example, in the case that the disturbance information is 'subject identification information is not continuative', the attribute disturbing unit 470 instructs the subject identification information control unit 490 to change the subject identification information at a time when receiving the first acquisition permit. Moreover, for example, in the case that the disturbance information is 'subject identification information is changed every 3 times of acquisition', the attribute disturbing unit 170 instructs the subject identification information control unit 490 to change the subject identification information every three times of receiving the acquisition permit.

An object of changing the subject identification information is to prevent personal privacy from being opened gradually while the attribute providing apparatus 460 provides the attribute using apparatus 150 with the attribute value of the same subject (user) repeatedly. For example, in the case of position information, even if the random noise is added, there is danger that a location of home or a location of an office may be inferred from the position information which is generated at many time zones.

Moreover, if the subject identification information is merely deleted from the attribute information with which the attribute providing apparatus 460 provides the attribute using apparatus 150, the utilization objective such as the detection of moving path may not be able to be achieved in some cases.

The attribute disturbance unit 470 refers to the attribute holding unit 180, and generates the processed attribute on the basis of the acquisition request and transmits the processed attribute to the attribute using apparatus 150.

The processed attribute according to the exemplary embodiment includes at least an attribute name, the attribute value and the subject identification information of the subject including the attribute. Here, the subject identification information of the processed attribute according to the exemplary embodiment is corresponding to the subject identification information which is obtained by being changed by the subject identification information control unit 490 on the basis of the disturbance information included in the acquisition permit.

The disturbance information generating unit 120 according to the exemplary embodiment is the same as one according to the first exemplary embodiment.

Here, the subject identification information control unit 490 may be included in the attribute disturbance unit 470 or may be included in the attribute holding unit 180.

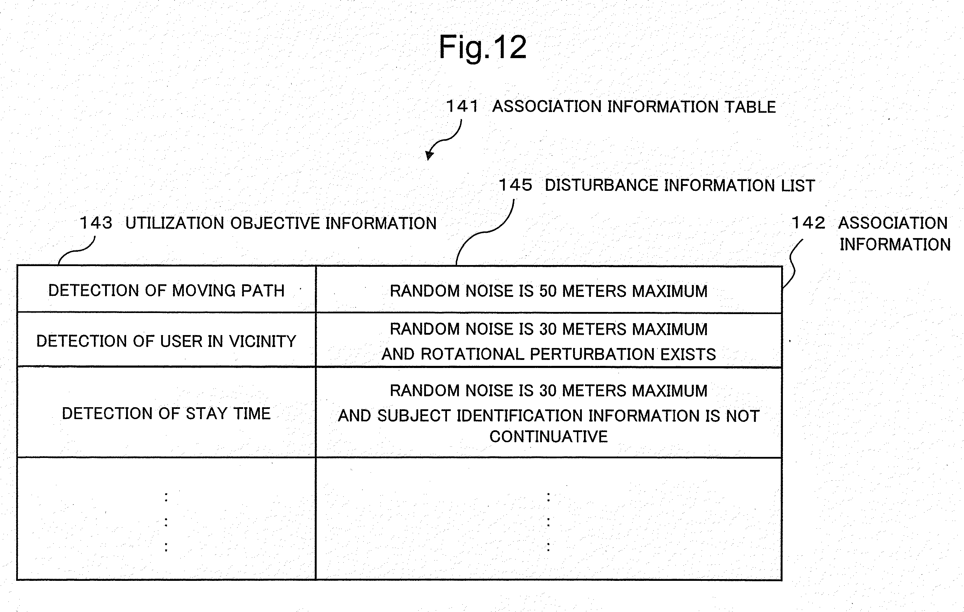

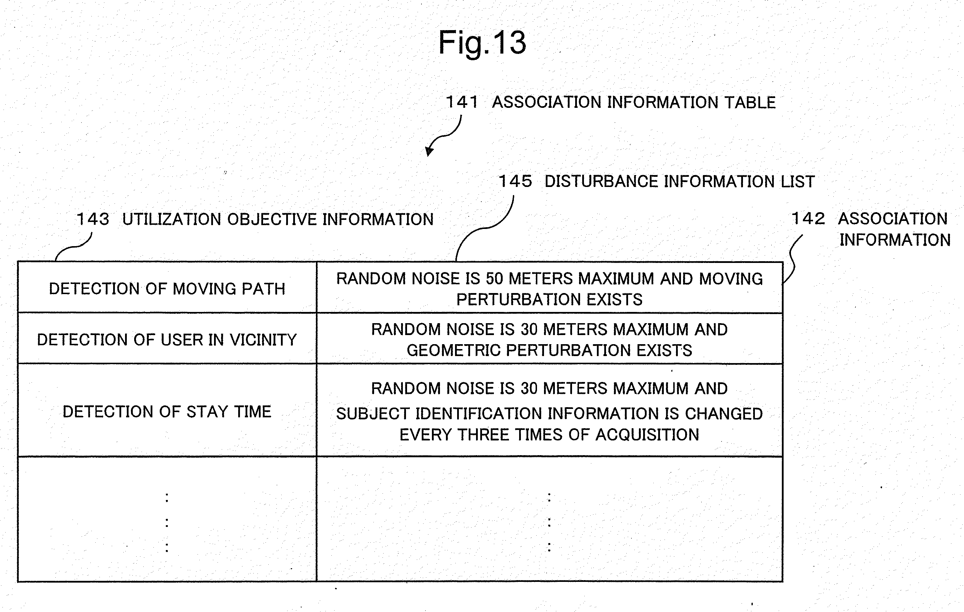

Fig. 12 shows an example of the association information 142 in the exemplary embodiment. Fig. 13 shows another example of the association information 142 in the exemplary embodiment.

An example of the disturbance information, which the disturbance information generating unit 120 generates in the exemplary embodiment, will be described with reference to Fig. 12 and Fig. 13.

For example, in the case that the utilization objective information included in the permit issuance request is 'detection of stay time', the disturbance information generating unit 120 detects the association information 142, which includes the utilization objective information 143 corresponding to 'detection of stay time', with reference to the association information table 141 shown in Fig. 12. Next, the disturbance information generating unit 120 generates the disturbance information on the basis of the disturbance information lists 145 which is included in the detected corresponding information 142 and which is corresponding to 'random noise is 30 meters maximum and subject identification information is not continuative', and outputs the disturbance information. The disturbance information is the noise information corresponding to 'random noise is 30 meters maximum', and the subject identification information continuity information corresponding to 'subject identification information is not continuative'.

For example, in the case that the utilization objective information included in the permit issuance request is 'detection of stay time', the disturbance information generating unit 120 detects the association information 142, which includes the utilization objective information 143 corresponding to 'detection of stay time', with reference to the association information table 141 shown in Fig. 13. Next, the disturbance information generating unit 120 generates the disturbance information on the basis of the disturbance information list 145 which is included in the detected association information 142 and which is corresponding to 'random noise is 30 meters maximum, and subject identification information is changed every 3 times of acquisition', and outputs the disturbance information. The disturbance information is the noise information corresponding to random noise is 30 meters maximum', and subject identification information changing timing information corresponding to 'subject identification information is changed every 3 times of acquisition'.

Here, similarly to the first exemplary embodiment, also in the exemplary embodiment, the permit issuance unit 130 may transmit the acquisition permit, which includes the disturbance information and the number of times of acquisition permission 244 outputted by the disturbance information generating unit 120, and the corresponding attribute identification information, to the attribute using apparatus 150.

In this case, when the subject identification information control unit 490 of the attribute providing apparatus 460 receives the acquisition request including the acquisition permit with exceeding the number of acquisition permission included in the acquisition permit, the subject identification information control unit 490 may change the subject identification information which the attribute holding unit 180 holds.

In addition to the effect which the first exemplary embodiment includes, the exemplary embodiment includes an effect in a point that, even if the disturbance to change the subject identification information of the subject including the attribute is carried out, it is possible to guarantee the quality of the mining results.

The reason is that the disturbance information generating unit 120 generates the subject identification information continuity information and the subject identification information changing timing information as the disturbance information.

< < <Fifth exemplary embodiment>>>

Next, a fifth exemplary embodiment of the present invention will be described in detail with reference to a drawing. Hereinafter, description on contents which overlap with the above-mentioned description is omitted within a range where description on the exemplary embodiment does not become unclear.

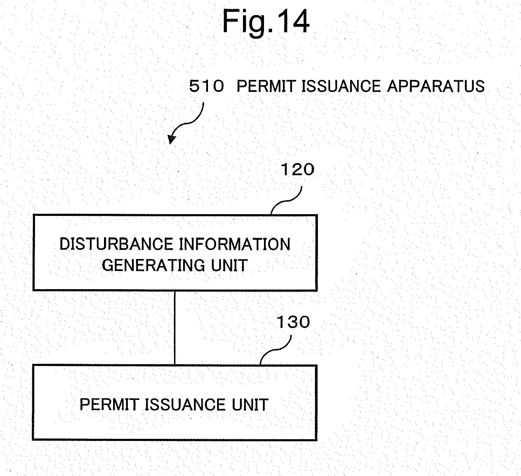

Fig. 14 is a block diagram showing a configuration of a permit issuance  apparatus 510 according to the fifth exemplary embodiment of the present invention.

Referring to Fig. 14, the permit issuance apparatus 510 according to the exemplary embodiment includes the disturbance information generating unit 120 and the permit issuance unit 130.

In the case that the disturbance information generating unit 120 receives the permit issuance request, the disturbance information generating unit 120 generates the disturbance information, which is a condition for permitting acquisition of the attribute specified by attribute identification information included in the permit issuance request and which is corresponding to the attribute, on the basis of the received permit issuance request. For example, the disturbance information generating unit 120 may generate the disturbance information on the basis of an association table (not shown in the figure) between the attribute and the disturbance information, or may generate the disturbance information on the basis of information (not shown in the figure) which indicates a state of distribution of the attribute value.

The permit issuance unit 130 transmits the acquisition permit which associates the attribute identification information and the disturbance information, which is generated by the disturbance information generating unit 120, and includes the association.

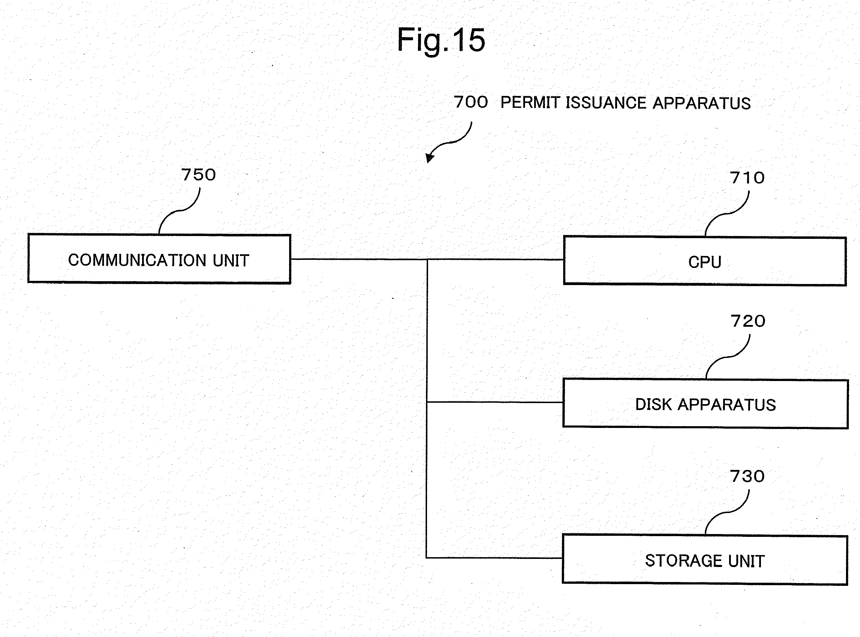

The permit issuance apparatus 510 may be a permit issuance apparatus 700 which is realized by a general purpose computer as shown in Fig. 15.

Fig. 15 is a block diagram showing a configuration of the permit issuance apparatus 700, which makes a computer execute a predetermined process by use of a program, in the exemplary embodiment.

Referring to Fig. 15, the permit issuance apparatus 700 includes CPU (Central Processing Unit) 710, a disk apparatus 720, a storage unit 730 and a communication unit 750.

The disturbance information generating unit 120 and the permit issuance unit 130 of the permit issuance apparatus 510 shown in Fig. 14 are corresponding to CPU 710, the disk apparatus 720 and the storage unit 730.

CPU 710 transfers the program, which is stored in the disk apparatus 720,  to the storage unit 730, and carries out the same process as one carried out by the disturbance information generating unit 120 and the permit issuance unit 130 on the basis of the transferred program.

The disk apparatus 720 stores the program.

The storage unit 730 stores the transferred program. The communication unit 750 is included in the disturbance information generating unit 120 and the permit issuance unit 130.

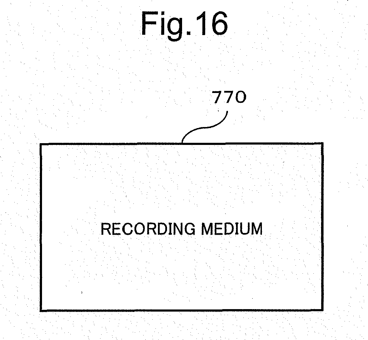

Fig. 16 shows a recording medium (or storage medium) 770 which is supplied from outside. The recording medium 770 may be a non-volatile recording medium which stores information (for example, program which makes the permit issuance apparatus 700 carry out the operation defined by a flowchart shown in Fig. 5 which will be described later) non-temporarily.

The recording medium 770, which records a code of the above-mentioned program, may be supplied to the permit issuance apparatus 700, and CPU 710 may read and carry out the code of the program which is stored in the recording medium 770. Or, CPU 710 may make the code of the program, which is stored in the recording medium 770, stored in the disk apparatus 720 and/or the storage unit 730. That is, the exemplary embodiment includes an exemplary embodiment of the recording medium 770 recording the program (software), which is executed by the permit issuance apparatus 700 (CPU 710), temporarily or non-temporarily.

Also with respect to the first to the fourth exemplary embodiments, the permit issuance apparatuses 110, 310 and 410 similarly may be the permit issue apparatus 700 which is realized by the general purpose computer.

The exemplary embodiment includes an effect in a point that, in the case that the mining operator conducts the data mining by use of the disturbed attribute value, it is possible to guarantee the user the quality of the mining results.

The reason is that the disturbance information generating unit 120 generates the disturbance information on the basis of the permit issuance request, and the permit issuance unit 130 transmits the acquisition permit including the disturbance information.

While the present invention has been described with reference to the exemplary  embodiment, the present invention is not limited to the above-mentioned exemplary embodiment. Various changes, which a person skilled in the art can understand, can be added to the composition and the details of the invention of the present application in the scope of the invention of the present application.

This application is based upon and claims the benefit of priority from Japanese Patent Application No. 2011-064600 filed on March 23, 2011, the disclosure of which is incorporated herein in its entirety by reference.

DESCRIPTION OF THE REFERENCE NUMERALS

| | |
|---|---|
| 110 | Permit issuance apparatus |
| 120 | Disturbance information generating unit |
| 130 | Permit issuance unit |
| 140 | Association information storing unit |
| 141 | Association information table |
| 142 | Association information |
| 143 | Utilization objective information |
| 145 | Disturbance information list |
| 150 | Attribute using apparatus |
| 160 | Attribute providing apparatus |
| 170 | Attribute disturbing unit |
| 180 | Attribute holding unit |
| 242 | Association information |
| 244 | Number of times of acquisition permission |
| 310 | Permit issuance apparatus |
| 320 | Disturbance information generating unit |
| 321 | Additional-noise information |
| 322 | Additional-noise maximum width |
| 340 | Distribution information holding unit |
| 360 | Attribute providing apparatus |
| 390 | Attribute value distribution detecting unit |
| 391 | Division |
| 392 | Number of attribute values |
| 393 | Attribute value distribution information |
| 394 | Division identification information |
| 395 | Attribute value number |
| 460 | Attribute providing apparatus |
| 470 | Attribute disturbing unit |
| 490 | Subject identification information control unit |
| 510 | Permit issuance apparatus |
| 700 | Permit issuance apparatus |
| 710 | CPU |
| 720 | Disk apparatus |
| 730 | Storage unit |
| 750 | Communication unit |

**Claims**

1.   A permit issuance apparatus, comprising:

in the case of receiving a permit issuance request for requesting issuance of an acquisition permit that includes at least attribute identification information of one or more than one attributes, and disturbance information corresponding to said attribute, and that indicates to permit acquisition of said attributes, a disturbance information generating means for generating the disturbance information, which is a condition for permitting acquisition of said attribute and which is corresponding to said attribute, on the basis of said received permit issuance request; and

a permit issuance means for transmitting the acquisition permit which associates said attribute identification information and said disturbance information and includes the association.

2. The permit issuance apparatus according to claim 1,
wherein said permit issuance request includes utilization objective information of said attribute; and
said disturbance information generating means generates said disturbance information on the basis of predetermined association information which associates said utilization objective information and a disturbance information list including at least one said disturbance information.

3. The permit issuance apparatus according to claim 1 or 2,
wherein said disturbance information includes noise information which is added to an attribute value of said attribute.

4. The permit issuance apparatus according to claim 3,
wherein said permit issuance request includes planned number of times of acquiring said attribute information; and said disturbance information generating means generates said noise information on the basis of predetermined association information which associates said utilization objective information, said disturbance information list including at least one said disturbance information, and said planned number of times of acquiring.

5. The permit issuance apparatus according to claim 3, further comprising:

a distribution information holding means which holds distribution information of said attribute information; and said disturbance information generating means generates said noise information on the basis of said distribution information.

6. The permit issuance apparatus according to claim 3 or 4,
wherein said disturbance information includes noise deflection information which indicates association between number of times of using said acquisition permit, and a degree of deflection of distribution of added noise.

7. The permit issuance apparatus according to any one of claims 1 to 6,
wherein said disturbance information includes rotational perturbation information which indicates whether rotational perturbation is added to an attribute value of said attribute or not.

8. The permit issuance apparatus according to any one of claims 1 to 7,
wherein said disturbance information includes moving perturbation information which indicates whether moving perturbation is added to an attribute value of said attribute or not.

9. The permit issuance apparatus according to any one of claims 1 to 8,
wherein said disturbance information includes subject identification information continuity information that indicates whether subject identification information, which is included in said attribute and which is related to a subject including said attribute, is different per said acquisition permit or not.

10. The permit issuance apparatus according to any one of claims 1 to 9,
wherein said disturbance information includes subject identification information changing timing information that indicates planned number of times of acquisition corresponding to timing for changing subject identification information which is included in said attribute and which is related to a subject including said attribute.

11. A permit issuance method which a computer executes which comprising:

in the case of receiving a permit issuance request for requesting issuance of an acquisition permit which includes at least attribute identification information of one or more than one attributes, and disturbance information corresponding to said attribute and which indicates to permit acquisition of said attributes,
generating said disturbance information, which is a condition for permitting acquisition of said attribute and which is corresponding to said attribute, on the basis of said received permit issuance request; and
transmitting the acquisition permit which associates said attribute identification information and said disturbance information and includes the association.

12. A non-transitory medium for recording a program which causes a computer to execute a processing, the processing comprising:

in the case of receiving a permit issuance request for requesting issuance of an acquisition permit which includes at least attribute identification information of one or more than one attributes, and disturbance information corresponding to said attribute and which indicates to permit acquisition of said attributes,

generating the disturbance information, which is a condition for permitting acquisition of said attribute and which is corresponding to said attribute, on the basis of said received permit issuance request; and

transmitting the acquisition permit which associates said attribute identification information and said disturbance information and includes the association.

**13.** An attribute providing system, comprising:

the permit issuance apparatus according to any one of claims 1 to 9; and
an attribute providing apparatus including an attribute disturbing means which disturbs said attribute on the basis of said disturbance information included in said acquisition permit.

**14.** An attribute providing system, comprising:

the permit issuance apparatus according to any one of claims 3 to 5; and
an attribute providing apparatus including an attribute disturbing means to add noise to an attribute value, which is included in said attribute, on the basis of said noise information included in said acquisition permit.

**15.** An attribute providing system, comprising:

the permit issuance apparatus according to claim 5; and
an attribute providing apparatus,
wherein the attribute providing apparatus including:

an attribute value distribution detecting means to generates distribution information of said attribute information and transmits said distribution information to said permit issuance apparatus; and
an attribute disturbing means to add noise to an attribute value, which is included in said attribute, on the basis of said noise information included in said acquisition permit.

**16.** An attribute providing system, comprising:

the permit issuance apparatus according to claim 6; and
an attribute providing apparatus including an attribute disturbing means to add noise, which is generated on the basis of said noise deflection information included in said acquisition permit, to an attribute value included in said attribute.

**17.** An attribute providing system, comprising:

the permit issuance apparatus according to claim 7; and
an attribute providing apparatus including an attribute disturbing means to add rotational perturbation to an attribute value, which is included in said attribute, on the basis of said rotational perturbation information included in said acquisition permit.

**18.** An attribute providing system, comprising:

the permit issuance apparatus according to claim 8; and
an attribute providing apparatus including an attribute disturbing means to add moving perturbation to an attribute value, which is included in said attribute, on the basis of said moving perturbation information included in said acquisition permit.

**19.** An attribute providing system, comprising:

the permit issuance apparatus according to claim 9; and
an attribute providing apparatus including an attribute disturbing means to change said subject identification information, which is added to said attribute, on the basis of said subject identification information continuity information included in said acquisition permit.

20. An attribute providing system, comprising:

the permit issuance apparatus according to claim 10; and
an attribute providing apparatus including an attribute disturbing means to change said subject identification information, which is added to said attribute, on the basis of said subject identification information changing timing information included in said acquisition permit.

Fig.1

160 ATTRIBUTE PROVIDING APPARATUS

170 ATTRIBUTE DISTURBING UNIT

180 ATTRIBUTE HOLDING UNIT

110 PERMIT ISSUANCE APPARATUS

140 ASSOCIATION INFORMATION STORING UNIT

120 DISTURBANCE INFORMATION GENERATING UNIT

130 PERMIT ISSUANCE UNIT

150 ATTRIBUTE USING APPARATUS

151 MINING UNIT

EP 2 690 571 A1

# Fig.2

EP 2 690 571 A1

# Fig.3

141 ASSOCIATION INFORMATION TABLE

145 DISTURBANCE INFORMATION LIST

143 UTILIZATION OBJECTIVE INFORMATION

142 ASSOCIATION INFORMATION

| DETECTION OF MOVING PATH | RANDOM NOISE IS 50 METERS MAXIMUM |
|---|---|
| DETECTION OF USER IN VICINITY | RANDOM NOISE IS 30 METERS MAXIMUM AND ROTATIONAL PERTURBATION EXISTS |
| ⋮ | ⋮ |

EP 2 690 571 A1

# Fig.4

141 ASSOCIATION INFORMATION TABLE

145 DISTURBANCE INFORMATION LIST

143 UTILIZATION OBJECTIVE INFORMATION

142 ASSOCIATION INFORMATION

| DETECTION OF MOVING PATH | RANDOM NOISE IS 50 METERS MAXIMUM AND MOVING PERTURBATION EXISTS |
|---|---|
| DETECTION OF USER IN VICINITY | RANDOM NOISE IS 30 METERS MAXIMUM AND GEOMETRIC PERTURBATION EXISTS |
| ⋮ | ⋮ |

EP 2 690 571 A1

# Fig.5

```
                    ┌─────────┐
                    │  START  │
                    └─────────┘
                         │
                         ▼
┌──────────────────────────────────────────────────────────────────────┐   S111
│              RECEIVE PERMIT ISSUANCE REQUEST                           │
└──────────────────────────────────────────────────────────────────────┘
                         │
                         ▼
┌──────────────────────────────────────────────────────────────────────┐   S112
│            EXTRACT UTILIZATION OBJECTIVE INFORMATION                    │
└──────────────────────────────────────────────────────────────────────┘
                         │
                         ▼
┌──────────────────────────────────────────────────────────────────────┐   S113
│  DETECT ASSOCIATION INFORMATION 142 WHOSE UTILIZATION OBJECTIVE         │
│                    INFORMATION IS THE SAME                              │
└──────────────────────────────────────────────────────────────────────┘
                         │
                         ▼
┌──────────────────────────────────────────────────────────────────────┐   S114
│            EXTRACT DISTURBANCE CONTENT INFORMATION 145                  │
└──────────────────────────────────────────────────────────────────────┘
                         │
                         ▼
┌──────────────────────────────────────────────────────────────────────┐   S115
│  GENERATE DISTURBANCE INFORMATION, AND OUTPUT DISTURBANCE              │
│          INFORMATION TO PERMIT ISSUANCE UNIT 130                        │
└──────────────────────────────────────────────────────────────────────┘
                         │
                         ▼
┌──────────────────────────────────────────────────────────────────────┐   S116
│   GENERATE ACQUISITION PERMIT, AND TRANSMIT ACQUISITION PERMIT          │
└──────────────────────────────────────────────────────────────────────┘
                         │
                         ▼
                    ┌─────────┐
                    │   END   │
                    └─────────┘
```

# Fig.6

241 ASSOCIATION INFORMATION TABLE

143 UTILIZATION OBJECTIVE INFORMATION

244 NUMBER OF TIMES OF ACQUISITION PERMISSION

145 DISTURBANCE INFORMATION LIST

242 ASSOCIATION INFORMATION

| 143 UTILIZATION OBJECTIVE INFORMATION | 244 NUMBER OF TIMES OF ACQUISITION PERMISSION | 145 DISTURBANCE INFORMATION LIST |
|---|---|---|
| DETECTION OF MOVING PATH | 1 | RANDOM NOISE IS 30 METERS MAXIMUM |
| DETECTION OF MOVING PATH | 3 | RANDOM NOISE IS 50 METERS MAXIMUM |
| DETECTION OF MOVING PATH | 10 | RANDOM NOISE IS 200 METERS MAXIMUM |
| DETECTION OF MOVING PATH | NO-LIMIT | 50 METERS X NUMBER OF TIMES OF ACQUISITION |
| DETECTION OF USER IN VICINITY | 1 | RANDOM NOISE IS 30 METERS MAXIMUM |
| DETECTION OF USER IN VICINITY | 3 | RANDOM NOISE IS 50 METERS MAXIMUM |
| DETECTION OF USER IN VICINITY | 10 | RANDOM NOISE IS 200 METERS MAXIMUM |
| DETECTION OF USER IN VICINITY | NO-LIMIT | 50 METERS X NUMBER OF TIMES OF ACQUISITION |
| ⋮ | ⋮ | ⋮ |

EP 2 690 571 A1

# Fig.7

# Fig.8

391 DIVISION

392 NUMBER OF ATTRIBUTE VALUES

| | | | |
|---|---|---|---|
| 0 | 11 | 17 | 48 |
| 7 | 15 | 33 | 55 |
| 3 | 1 | 30 | 41 |
| 4 | 7 | 19 | 30 |

EP 2 690 571 A1

# Fig.9

393 ATTRIBUTE VALUE DISTRIBUTION INFORMATION

394 DIVISION IDENTIFICATION INFORMATION

395 ATTRIBUTE VALUE NUMBER

| 1 | 0 |
|---|---|
| 2 | 11 |
| 3 | 17 |
| 4 | 48 |
| 5 | 7 |
| 6 | 15 |
| 7 | 33 |
| 8 | 55 |
| 9 | 3 |
| 10 | 1 |
| 11 | 30 |
| 12 | 41 |
| 13 | 4 |
| 14 | 7 |
| 15 | 19 |
| 16 | 30 |

# Fig.10

321 ADDITIONAL-NOISE INFORMATION

394 DIVISION IDENTIFICATION INFORMATION

322 ADDITIONAL-NOISE MAXIMUM WIDTH

| | |
|---|---|
| 1 | 2000 |
| 2 | 91 |
| 3 | 58 |
| 4 | 21 |
| 5 | 143 |
| 6 | 67 |
| 7 | 31 |
| 8 | 19 |
| 9 | 334 |
| 10 | 1000 |
| 11 | 34 |
| 12 | 25 |
| 13 | 250 |
| 14 | 143 |
| 15 | 53 |
| 16 | 34 |

# Fig.11

ATTRIBUTE PROVIDING APPARATUS — 460

SUBJECT IDENTIFICATION INFORMATION CONTROL UNIT — 490

ATTRIBUTE DISTURBING UNIT — 470

ATTRIBUTE HOLDING UNIT — 180

PERMIT ISSUANCE APPARATUS — 110

ASSOCIATION INFORMATION STORING UNIT — 140

DISTRIBUTION INFORMATION GENERATING UNIT — 120

PERMIT ISSUANCE UNIT — 130

ATTRIBUTE USING APPARATUS — 150

MINING UNIT — 151

## Fig.12

141 ASSOCIATION INFORMATION TABLE

145 DISTURBANCE INFORMATION LIST

143 UTILIZATION OBJECTIVE INFORMATION

142 ASSOCIATION INFORMATION

| 143 UTILIZATION OBJECTIVE INFORMATION | 142 ASSOCIATION INFORMATION |
|---|---|
| DETECTION OF MOVING PATH | RANDOM NOISE IS 50 METERS MAXIMUM |
| DETECTION OF USER IN VICINITY | RANDOM NOISE IS 30 METERS MAXIMUM AND ROTATIONAL PERTURBATION EXISTS |
| DETECTION OF STAY TIME | RANDOM NOISE IS 30 METERS MAXIMUM AND SUBJECT IDENTIFICATION INFORMATION IS NOT CONTINUATIVE |
| ⋮ | ⋮ |

# Fig.13

141 ASSOCIATION INFORMATION TABLE

145 DISTURBANCE INFORMATION LIST

143 UTILIZATION OBJECTIVE INFORMATION

142 ASSOCIATION INFORMATION

| 143 UTILIZATION OBJECTIVE INFORMATION | 145 DISTURBANCE INFORMATION LIST |
|---|---|
| DETECTION OF MOVING PATH | RANDOM NOISE IS 50 METERS MAXIMUM AND MOVING PERTURBATION EXISTS |
| DETECTION OF USER IN VICINITY | RANDOM NOISE IS 30 METERS MAXIMUM AND GEOMETRIC PERTURBATION EXISTS |
| DETECTION OF STAY TIME | RANDOM NOISE IS 30 METERS MAXIMUM AND SUBJECT IDENTIFICATION INFORMATION IS CHANGED EVERY THREE TIMES OF ACQUISITION |
| ⋮ | ⋮ |

EP 2 690 571 A1

# Fig.14

510 PERMIT ISSUANCE APPARATUS

120

DISTURBANCE INFORMATION
GENERATING UNIT

130

PERMIT ISSUANCE UNIT

# Fig.15

700 PERMIT ISSUANCE APPARATUS

750

COMMUNICATION UNIT

710

CPU

720

DISK APPARATUS

730

STORAGE UNIT

EP 2 690 571 A1

# Fig.16

770

RECORDING MEDIUM

<table>
<tr><td colspan="2" align="center">**INTERNATIONAL SEARCH REPORT**</td><td colspan="2">International application No.<br>PCT/JP2012/058034</td></tr>
</table>

A. CLASSIFICATION OF SUBJECT MATTER
*G06F19/00*(2011.01)i

According to International Patent Classification (IPC) or to both national classification and IPC

B. FIELDS SEARCHED

Minimum documentation searched (classification system followed by classification symbols)
G06F19/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | Koichi ITO, "User Kengen ni Ojita Privacy Hogo Data Mining Hoshiki", Computer Security Symposium 2010 Ronbunshu [separate vol.2], 12 October 2010 (12.10.2010), vol.2010, pages 699 to 704 | 1-20 |
| A | Jun SAKUMA, "Privacy-Preserving Data Mining", Journal of Japanese Society for Artificial Intelligence, vol.24, no.2, 01 March 2009 (01.03.2009), vol.24, pages 283 to 294 | 1-20 |
| A | Shintaro URABE, "A Collusion-Resistant Approach to Privacy-Preserving Distributed Data Mining", IPSJ SIG Notes, vol.2005, no.63, 24 June 2005 (24.06.2005), vol.2005, pages 21 to 25 | 1-20 |

☐ Further documents are listed in the continuation of Box C.　　☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>21 June, 2012 (21.06.12) | Date of mailing of the international search report<br>03 July, 2012 (03.07.12) |
|---|---|
| Name and mailing address of the ISA/<br>Japanese Patent Office | Authorized officer |
| Facsimile No. | Telephone No. |

Form PCT/ISA/210 (second sheet) (July 2009)

**REFERENCES CITED IN THE DESCRIPTION**

**Patent documents cited in the description**

• JP 2010176308 A

• JP 2011064600 A

**Non-patent literature cited in the description**

• Privacy-Preserving Data Mining: Models and Algorithms. July 2008, 1-9157-181